# EUROPÄISCHE PATENTANMELDUNG

(11) **EP 2 113 635 A1**
(43) Veröffentlichungstag der Anmeldung: **04.11.2009**
(21) Anmeldenummer: 08008261.3
(22) Anmeldetag: 30.04.2008
(51) Int. Cl.: F01D 5/18, F01D 5/14, F01D 5/28, F01D 25/10

(54) **Mehrstufige Kondensationsdampfturbine**

(71) Anmelder: SIEMENS AKTIENGESELLSCHAFT, 80333 München (DE)
(72) Erfinder: Ebert, Christoph, 01139 Dresden (DE); Hufenbach, Werner, Prof., 01324 Dresden (DE); Langkamp, Albert, 01324 Dresden (DE); Mantei, Markus, 01896 Pulsnitz OT Friedersdorf (DE)

(57) **Zusammenfassung**

Die vorliegende Erfindung betrifft eine mehrstufige Kondensationsdampfturbine. Um bei einer derartigen Kondensationsdampfturbine mit einfachen Mitteln eine erhebliche Reduzierung der Tropfenschlagerosion zu ermöglichen, sind zumindest für die letzte Stufe die Leitschaufeln aus Verbundwerkstoff hergestellt, wobei der Aufbau der Leitschaufeln aus mehreren Lagen von Verbundwerkstoff besteht, und wobei nahe der Oberfläche zwischen zwei Lagen aus Verbundwerkstoff eine Lage aus einem elektrisch leitenden Material besteht, welches mittels elektrischer Energie beheizbar ist.

## Beschreibung

Die vorliegende Erfindung betrifft eine mehrstufige Kondensationsdampfturbine.

Bei einer Kondensationsdampfturbine sind die Laufschaufeln der letzten Stufe bzw. der letzten Stufen einer Tropfenschlagerosion ausgesetzt. An den Leitschaufeln vor den Laufschaufeln sammelt sich aufgrund der Dampfnässe Wasser, das sich als Tropfen von den Leitschaufeln löst und im Dampfstrom beschleunigt wird. Diese Tropfen treffen dann auf die sich mit hoher Umfangsgeschwindigkeit bewegenden Laufschaufeln und schlagen dort Material heraus. Auf diese Weise kommt es bei den Laufschaufeln zu erheblichen Erosionsbelastungen.

Zurzeit ist es Stand der Technik, die Leitschaufeln aus metallischen Werkstoffen herzustellen. Maßnahmen zur Reduzierung der Tropfen als auch Maßnahmen zur Resistenzerhöhung der Laufschaufeln gegenüber den Tropfen müssen so ausgelegt sein, dass der Abtrag des Materials der Laufschaufeln nicht zum Versagen, bzw. nicht zu einem übermäßigen Wirkungsgradverlust führt.

Ein Beheizen der Leitschaufeln ist eine letzte Maßnahme zur Minderung der Tropfenschlagerosion und wird wegen der hohen Kosten und des immensen Aufwands, wenn möglich, vermieden. Bei einer beheizten Laufschaufel erfolgt die Heizung in der Weise, dass die Leitschaufeln hohl ausgeführt sind und mit heißem Dampf durchströmt werden.

Bei der Einführung von neuen Materialien, wie zum Beispiel CFK, GFK oder CFC, für die Laufschaufeln, die bezüglich gewichtsspezifischer Festigkeit Vorteile versprechen, können verschärfte Probleme bezüglich einer Erosionsresistenz auftreten. Es müssen daher geeignete weitere Maßnahmen vorgenommen werden, welche aber die angestrebten Vorteile der neuen Materialien wiederum einschränken. Solche Maßnahmen könnten sein: Anbringen einer Erosionsschutzleiste oder eines Erosionsschutzmantels aus herkömmlichen Material, Beschichten der Oberfläche o.ä. (siehe hierzu GB 2288441, US5112194, US5785498)

Aufgabe der vorliegenden Erfindung ist es eine mehrstufige Kondensationsdampfturbine anzugeben, bei welcher mit einfachen Mitteln eine erhebliche Reduzierung der Tropfenschlagerosion ermöglicht wird.

Diese Aufgabe wird gemäß der vorliegenden Erfindung für eine mehrstufige Kondensationsdampfturbine dadurch gelöst, dass zumindest für die letzte Stufe die Leitschaufeln aus Verbundwerkstoff hergestellt sind, wobei der Aufbau der Leitschaufeln aus mehreren Lagen von Verbundwerkstoff besteht, und wobei nahe der Oberfläche zwischen zwei Lagen aus Verbundwerkstoff eine Lage aus einem elektrisch leitenden Material besteht, welche mittels elektrischer Energie beheizbar ist.

Bei der erfindungsgemäßen Kondensationsdampfturbine werden auch die Leitschaufeln aus Verbundwerkstoff hergestellt, für die dann auf einfache Weise eine Heizmöglichkeit für die Oberfläche der Leitschaufeln geschaffen wird.

Die Fertigung der Leitschaufeln ist bei der erfindungsgemäßen Kondensationsdampfturbine günstiger als die Fertigung einer mit Dampf beheizbaren Leitschaufel und bei steigendem Stahlpreis und optimierter Fertigung auch günstiger als herkömmliche Leitschaufeln.

Auf die Einrichtung zur Versorgung der Hohlleitschaufeln mit Dampf kann verzichtet werden. Die Einrichtung zur Versorgung mit elektrischer Energie stellt einen verhältnismäßig geringen Aufwand dar.

Insgesamt kommt es bei der erfindungsgemäßen Kondensationsdampfturbine zu einer erheblichen Reduzierung der Erosionsbelastung bei den Laufschaufeln.

Zweckmäßige Weiterbildungen der erfindungsgemäßen Kondensationsdampfturbine sind u.a. **dadurch gekennzeichnet, dass** nur Teile der Schaufeloberfläche beheizbar sind und dass die Heizleistung abhängig vom Betriebspunkt einstellbar ist.

Das heißt, es wird nur dort geheizt, wo es notwendig ist und dann auch nur mit der notwendigen Temperatur.

Weitere zweckmäßige Ausgestaltungen der erfindungsgemäßen mehrstufigen Kondensationsdampfturbine ergeben sich aus den Unteransprüchen sowie aus der nachfolgenden Beschreibung anhand der Zeichnung von entsprechend der Erfindung aufgebauten Leitschaufeln.

Es zeigen:
- Figur 1: eine schematische perspektivische Ansicht einer erfindungsgemäßen Leitschaufel, bei welcher die aus einem elektrisch leitenden Material bestehende Lage aus einem Drahtgeflecht besteht,
- Figur 2: ein schematischer Querschnitt durch die in Figur 1 gezeigte Leitschaufel
- Figur 3: eine schematische perspektivische Ansicht einer erfindungsgemäßen Leitschaufel, bei welcher die aus einem elektrisch leitenden Material bestehende Lage aus einem Draht besteht, und
- Figur 4: einen schematischen Querschnitt durch eine erfindungsgemäße Leitschaufel, bei der nur Teile der Schaufeloberfläche beheizbar sind.

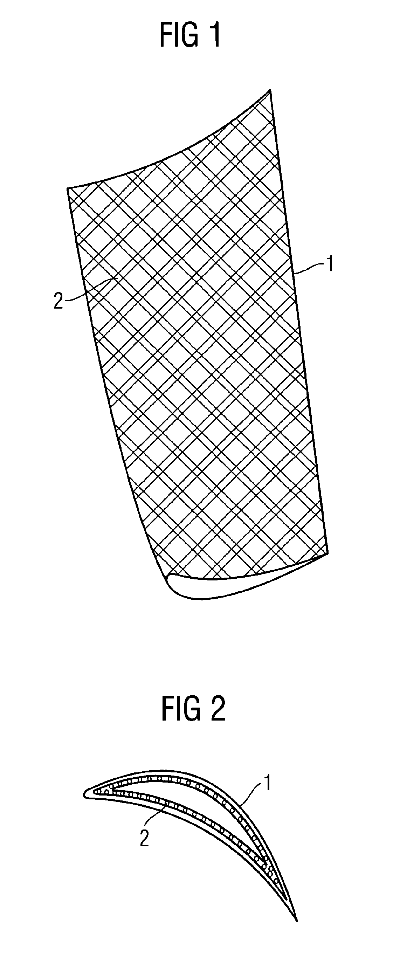

Figur 1 zeigt eine erfindungsgemäße Leitschaufel 1. Nahe der Oberfläche der Leitschaufel 1 ist ein Metalldrahtgeflecht 2 vorgesehen.

Dieses Metalldrahtgeflecht 2 kann über entsprechende Anschlüsse mittels elektrischer Energie beheizt werden, wodurch die Oberfläche der Leitschaufel 1 aufgeheizt wird.

Figur 2 zeigt einen Querschnitt durch die in Figur 1 dargestellte Leitschaufel 1.

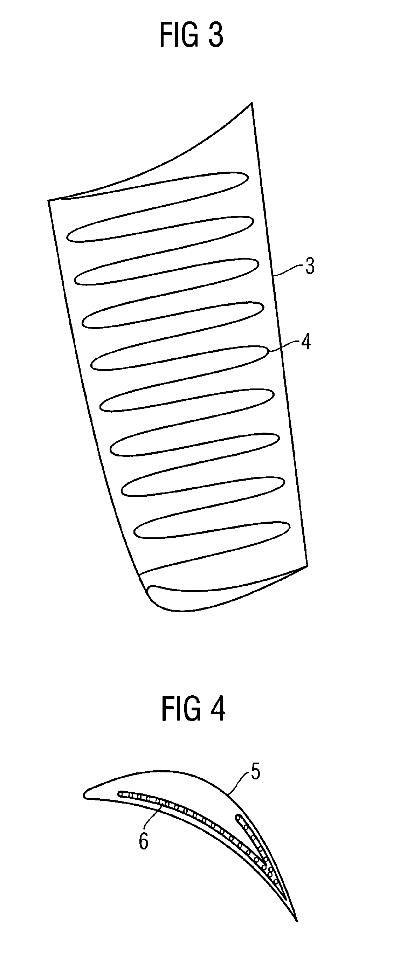

Figur 3 zeigt eine weitere gemäß der Erfindung aufgebaute Leitschaufel 3. Bei der in Figur 3 dargestellten Ausführungsform wird zum Beheizen der Oberfläche der Leitschaufel 3 ein nahe der Oberfläche geführter Metalldraht 4 verwendet.

Bei den in Figur 1 und Figur 3 dargestellten Leitschaufeln wird die gesamte Oberfläche der Leitschaufeln beheizt.

Es besteht jedoch die Möglichkeit, nur gezielt relevante Stellen der Oberfläche der Leitschaufeln zu heizen.

Eine derartige Möglichkeit ist in Figur 4 dargestellt. Figur 4 zeigt einen Querschnitt durch eine Leitschaufel 5, bei welcher nur Teile der Oberfläche der Leitschaufel mittels eines elektrisch leitenden Materials 6 beheizt werden.

## Patentansprüche

1. Mehrstufige Kondensationsdampfturbine,
**dadurch gekennzeichnet,**
**dass** zumindest für die letzte Stufe die Leitschaufeln aus Verbundwerkstoff hergestellt sind, wobei der Aufbau der Leitschaufeln aus mehreren Lagen von Verbundwerkstoff besteht, und wobei nahe der Oberfläche zwischen zwei Lagen aus Verbundwerkstoff eine Lage aus einem elektrisch leitenden Material besteht, welche mittels elektrischer Energie beheizbar ist.

2. Mehrstufige Kondensationsdampfturbine nach Anspruch 1,
**dadurch gekennzeichnet,**
**dass** die gesamte Schaufeloberfläche beheizbar ist.

3. Mehrstufige Kondensationsdampfturbine nach Anspruch 1,
**dadurch gekennzeichnet,**
**dass** nur Teile der Schaufeloberfläche beheizbar sind.

4. Mehrstufige Kondensationsdampfturbine nach Anspruch 3,
**dadurch gekennzeichnet,**
**dass** die Heizleistung betriebspunktabhängig einstellbar ist.

5. Mehrstufige Kondensationsdampfturbine nach einem der Ansprüche 1 bis 4,
**dadurch gekennzeichnet,**
**dass** die aus einem elektrisch leitenden Material bestehende Lage aus einem Draht besteht.

6. Mehrstufige Kondensationsdampfturbine nach einem der Ansprüche 1 bis 4,
**dadurch gekennzeichnet,**
**dass** die aus einem elektrisch leitenden Material bestehende Lage aus einem Drahtgeflecht besteht.

7. Mehrstufige Kondensationsdampfturbine nach einem der Ansprüche 1 bis 6,
**dadurch gekennzeichnet,**
**dass** die Leitschaufeln aus glasfaserverstärktem Kunststoff bestehen.

8. Mehrstufige Kondensationsdampfturbine nach einem der Ansprüche 1 bis 6,
**dadurch gekennzeichnet,**
**dass** die Leitschaufeln aus kohlefaserverstärktem Kunststoff bestehen.

9. Mehrstufige Kondensationsdampfturbine nach einem der vorhergehenden Ansprüche,
**dadurch gekennzeichnet,**
**dass** die genannten Maßnahmen zur Tropfenschlagserosionsreduzierung mit anderen Maßnahmen kombiniert sind.
